(19) Europäisches Patentamt
European Patent Office
Office européen des brevets

(11) **EP 1 843 191 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(51) Int Cl.:
***G02B 27/09*** *(2006.01)*   ***F41G 1/36*** *(2006.01)*
***G02B 23/12*** *(2006.01)*

(21) Anmeldenummer: 06126553.4

(22) Anmeldetag: **19.12.2006**

(54) **Zielaufheller für nachtsichttechnik**

Target brightener for night vision technology

Eclaireur de cible pour technologie de vision nocturne

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.04.2006 DE 202006005516 U**

(43) Veröffentlichungstag der Anmeldung:
**10.10.2007 Patentblatt 2007/41**

(73) Patentinhaber:
• **Drolshagen, Jürgen**
  **51061 Köln (DE)**
• **Picotronic GmbH**
  **56070 Koblenz (DE)**

(72) Erfinder:
• **Drolshagen, Jürgen**
  **D-51061, Köln (DE)**
• **Komischke, Thiemo**
  **D-56073, Koblenz (DE)**
• **Heckner, David**
  **D-56076, Koblenz (DE)**

(74) Vertreter: **Harmann, Bernd-Günther**
  **Kaminski Harmann Patentanwälte Est**
  **Austrasse 79**
  **9490 Vaduz (LI)**

(56) Entgegenhaltungen:
WO-A-91/00489          DE-A1- 10 261 769
DE-U1-202006 005 516   US-A- 4 707 595
US-B1- 6 714 564

**Beschreibung**

Die Erfindung betrifft einen Zielaufheller für Nachtsichttechnik nach dem Oberbegriff des Anspruch 1.

Beleuchtungseinrichtungen für Nachtsichttechnik als Zielaufheller sind seit längerem bekannt. Sie ermöglichen eine kontrastreiche Bilddarstellung, auch bei nicht ausreichendem Restlicht. Bei Einsatz einer aktiven Infrarotbeleuchtung ist durch die hohe Empfindlichkeit von Nachtsichtgeräten im nahen Infrarotbereich eine unbemerkte Beobachtung von Menschen und Tieren möglich.

Gattungsgemässe Beleuchtungseinrichtungen verwenden eine im Infrarotbereich Licht emittierende Diode (LED) mit einer nachgeschalteten Kollimationsoptik. Allerdings ist der Wirkungsgrad von LEDs im Vergleich zum Wirkungsgrad beispielsweise von Laserdioden niedriger und somit der Energieverbrauch bei gleicher Strahlungsleistung entsprechend höher. Des Weiteren ist die Ausleuchtung eines Zieles bei schwierigen Bedingungen wie Nebel mit solchen Beleuchtungseinrichtungen schlechter als es wünschenswert und grundsätzlich möglich ist. Durch die sehr divergente Abstrahlcharakteristik einer LED ist ausserdem der optische Aufbau solcher Beleuchtungseinrichtungen aufwändig.

Eine weitere bekannte Möglichkeit ist die Verwendung einer Laserdiode als Quelle der Beleuchtungseinrichtung. Allerdings stellen bisher bekannte Laserinfrarotbeleuchtungssysteme aufgrund der auftretenden Strahlungsintensität und Abstrahlcharakteristik entweder eine erhebliche Gefahr für das Auge dar und werden somit z.B. in Deutschland nach der Norm DIN EN 60825-1 2001-11 als Laserklasse 3B klassifiziert oder sind beleuchtungsschwach- Bei Lasersystemen der Laserklasse 3B ist bei Inbetriebnahme unter anderem zur Strahlenwarnung die Aussendung von optischen und akustischen Signalen erforderlich. Der Einsatz einer Laserbeleuchtungseinrichtung der Laserklasse 3B in Verb_ndung mit Nachtsichtgeräten, der unter anderem eine unbemerkte Boobachtung von Menschen und Tieren erlauben soll, ist somit nicht geeignet und widerspricht dem eigentlichen Zweck der Anordnung.

Die Patent schrift US 6,714,364 B1 cffenbart ein handhaltbares Gerät zur Zielaufhellung mit zusätzlicher Pointing-Funktion. F.s wird vorgeschlagen, die durch eine Laserquelle emittierte Strahlung unter Verwendung einer Linsenkombination zum einen teilweise fokussiert auf einen zielpunkt und zum anderen mit verstellbarem Abstrahlwinkel auf einen aufzuhellenden Zielbereich zu projizieren. Dadurch soll gleichzeitig sowohl eine Anzielfunktion als such eine im Abstrahlwinkel variable Aufhellung eines Zielbereichs durch das Gerät bereitgestellt werden. Aspekte hinsichtlich einer vom Gerät ausgehenden Gefahr für das Auge werden jedoch nicht berücksichtigt oder behandelt.

Der Erfindung liegt die Aufgabe zugrunde, einen Nachtsichtgerätzielaufheller bereitzustellen, welcher die Ausleuchtung des "Zielobjektes" über eine grosse Entfernung erlaubt, ohne dabei eine Gefährdung für Menschen oder Tiere darzustellen. Insbesondere soll dabei keine Notwendigkeit der Aussendung von Warnsignalen bestehen, um eine unbemerkte Beobachtung des Zielobjektes zu ermoglichen.

Um die Gefährdung für ein Auge ausgehend von einer Lasereinrichtung zu beurteilen, gibt es etliche Klassifizierungssysteme. Ein mögliches Klassifizierungssystem ist die Norm DIN EN 60825-1 2001-11. im Folgenden wird die Augensicherheit einer Lasereinricntung gemäss dieser Norm beurteilt.

Um bei einer Laserbeleuchtungseinrichtung jegliche Gofährdung für ein Auge auszuschliessen, auch bei einem Blick in die Laserquelle eines direkt im Strahlgang befindlichen Auges, darf ein bestimmter Beslrahlungswert nicht überschritten werden. Der maximal zulässige Bestrahlungswert, im Folgenden MZB-Wert genannt, ist abhängig von der Art der Bestrahlung und den Eigenschaften der Laserquelle. Bisher bekannte Laserbeleuchtungseinrichtungen sind als Systeme mit einer einstufigen Optik aufgebaut, wodurch eine scharfe Abbildung der Quelle im Auge eines Beobachters möglich ist. Eine solche mögliche scharfe Abbildung der Quelle stellt schon bei geringen Strahlungsleistungen eine erhebliche Gefahr für das Auge dar. Dagegen ist eine Laserbeleuchtungseinrichtung, welche eine ausgedehnte Quelle darstellt und somit keine scharfe Abbildung der Quelle ermöglicht, trotz höherer Strahlungsleistung weniger gefährlich für das Auge. Aus diesem Grund wird der MZB-Wert für ausgedehnte Quellen anders bestimmt als bei Punktquellen.

Der für ausgedehnte Quellen relevante MZB-Wert wird in W/m$^2$ angegeben und berechnet sich als Funktion von der Wellenlänge λ der Strahlung, im Folgenden stets in der Einheit Nanometer angegeben, und der Winkelausdehnung α der scheinbaren Quelle, im Folgenden stets in der Einheit Millirad angegeben. Die Winkelausdehnung beschreibt den Winkel α, unter welchem die scheinbare Quelle von einem Raumpunkt aus erscheint. Für eine Analyse der maximal zulässigen Bestrahlung ist die Winkelausdehnung α durch den Beobachtungsabstand von der scheinbaren Quelle bestimmt, aber durch keinen geringeren Abstand als 100mm, wobei die scheinbare Quelle das wirkliche oder scheinbare Objekt, welches das kleinstmögliche Bild auf der Netzhaut eines Auges erzeugt, darstellt. Dazu wird anhand einer Blende die Strahlungsleistung auf 63% der ursprünglichen Strahlungsleistung herabgesetzt und aus dem Durchmesser *d* dieser Blende die Winkelausdehnung α in 100mm Entfernung wie folgt bestimmt:

$$\alpha = \arctan\left(\frac{d/2}{100mm}\right)\cdot 2 \qquad\qquad (1)$$

Bei der Emission von divergenter Laserstrahlung und einer Winkelausdehnung von grösser als 1,5mrad wird, im Gegensatz zur Berechnung des MZB-Wertes für Punktquellen, der MZB-Wert unter anderem mit einem von der Winkelausdehnung abhängigen Faktor $C_6$, welcher zwischen 1 und 66,7 liegt, multipliziert. Diese Erhöhung des MZB-Wertes bei Vorliegen einer ausgedehnten Laserquelle ist zulässig, da die Gefährdung für das Auge ausgehend von ausgedehnten Laserquellen im Vergleich zu Punktquellen geringer ist.

Der MZB-Wert für Laserstrahlung mit einer Wellenlänge von $700 \leq \lambda < 1400$, einer Winkelausdehnung der scheinbaren Quelle von $\alpha > 1,5$ und einer Einwirkungsdauer von $t > T_2$, wobei $T_2$ nachfolgend definiert ist, berechnet sich nach DIN EN 60825-1 2001-11 wie folgt:

$$MZB = 18 \cdot C_4 \cdot C_6 \cdot C_7 \cdot T_2^{-0,25} W/m^2 , \qquad (2)$$

wobei $C_4$ und $C_7$ direkt von der Wellenlänge und $T_2$ von der Winkelausdehnung der scheinbaren Quelle abhängen.

Im Einzelnen berechnen sich die Faktoren wie folgt:

$$C_4 = \begin{cases} 10^{0,002 \cdot (\lambda - 700)} & \text{für } 700 \leq \lambda < 1050 \\ 5 & \text{für } 1050 \leq \lambda \leq 1400 \end{cases} \qquad (3)$$

$$C_7 = \begin{cases} 1 & \text{für } 700 \leq \lambda < 1150 \\ 10^{0,018 \cdot (\lambda - 1150)} & \text{für } 1150 \leq \lambda < 1200 \\ 8 & \text{für } 1200 \leq \lambda \leq 1400 \end{cases} \qquad (4)$$

$$T_2 = \begin{cases} 10 \cdot 10^{(\alpha - 1,5)/98,5} \text{ s} & \text{für } 1,5 < \alpha \leq 100 \\ 100 \text{s} & \text{für } 100 < \alpha \end{cases} \qquad (5)$$

$$C_6 = \begin{cases} \alpha/1,5 & \text{für } 1,5 < \alpha \leq 100 \\ 66,7 & \text{für } 100 < \alpha \end{cases} \qquad (6)$$

Zur Bestimmung der Augensicherheit einer Laserquelle wird die Strahlungsleistung innerhalb einer kreisrunden Blende mit 7mm Durchmesser am Punkt der grössten Gefährdung, jedoch mindestens im Abstand von 100mm von der scheinbaren Laserquelle, gemessen. Aus diesem Messwert wird die Bestrahlungsstärke bestimmt, welche zur Gewährung der Augensicherheit den gemäss (2) errechneten MZB-Wert nicht überschreiten darf. Die emittierte maximale Strahlungsleistung, bei welcher in jedem Falle eine Augensicherheit gewährt wird, hängt somit auch vom Betrag des Divergenzwinkels der emittierten Strahlung ab, da die Strahldichte je nach Divergenzwinkel bei grösser werdender Entfernung von der scheinbaren Quelle entsprechend abnimmt.

Im Folgenden wird unter Strahlquerschnitt der Durchmesser einer kreisrunden Blende, welche die Strahlungsleistung des Laserstrahls auf 63% herabsetzt, verstanden.

Erfindungsgemäss wird eine Laserquelle mit einer Strahlungsleistung von mindestens 15mW, insbesondere 100 bis 500mW, verwendet. Der Laserquelle sind mindestens zwei Optiken nachgeordnet. Die Emission der Laserquelle wird durch die erste Optik definiert aufgeweitet, sodass der Strahl vor Eintritt in die zweite Optik einen Strahlquerschnitt von mindestens 5mm aufweist, und somit die Strahldichte verringert. Des Weiteren wird durch die erste Optik der Strahl derart in die zweite Optik gelenkt, dass diese im Wesentlichen vollständig, insbesondere gleichmässig, ausgeleuchtet wird. Durch eine der ersten Optik nachgeordnete zweite Optik wird die Laserstrahlung definiert divergent emittiert. Teile der ersten und/oder der zweiten Optik sind begrenzt verstellbar ausgebildet, sodass der Divergenzwinkel der emittierten Strahlung verändert werden kann, wobei ein Mindestdivergenzwinkel durch eine Verstellbeschränkung gewährleistet ist. Eine scharfe Abbildung der Laserquelle durch das Auge als Einlinsensystem ist durch diese erfindungsgemässe Beleuchtungseinrichtung nicht möglich. Somit stellt die Beleuchtungseinrichtung eine ausgedehnte Quelle dar, bei der die Gefährdung für das Auge geringer als bei gleichstarken Punktquellen ist. Erfindungsgemäss wird der speziell für ausgedehnte Quellen geltende, erhöhte MZB-Wert nun durch die emittierte Strahlung der Beleuchtungseinrichtung, gemessen in 100mm Entfernung von der scheinbaren Quelle mit einer sich im Strahlgang der divergent emittierten Laserstrahlung befindlichen kreisrunden Blende mit 7mm Durchmesser, nicht überschritten.

Dadurch wird trotz der hohen Bestrahlungsleistung des Laseraufhellers, welcher durch eine hohe Helligkeit die Ausleuchtung des Zielobjektes über eine grosse Entfernung erlaubt, eine Anordnung bereitgestellt, welche keine Gefährdung für das Auge darstellt. Laserbeleuchtungseinrichtungen des Standes der Technik sind entweder beleuchtungsschwach oder stellen eine Gefährdung für Menschen und Tiere dar.

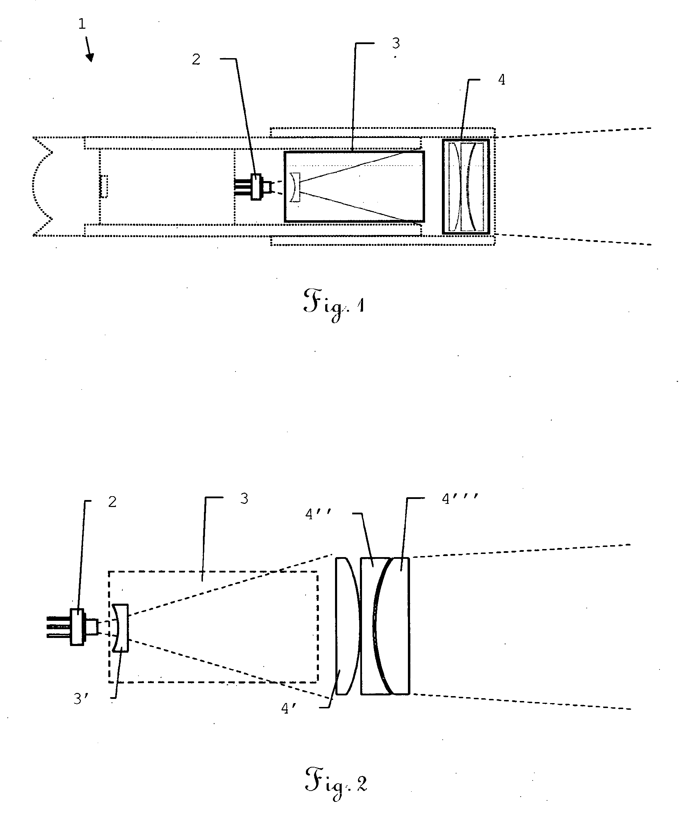

Die Aufweitung des Strahlquerschnitts und die Verringerung der Strahldichte der Emission der Laserquelle im Rahmen der ersten Optik können, wie in Figur 2 beschrieben, durch eine oder mehrere Linsen erfolgen. Ebenso kann die erste Optik jedoch alternativ oder zusätzlich weitere optische Elemente, wie z.B. eine Streulinse, ein Hologramm oder eine Gradientenoptik, enthalten.

Eine weitere mögliche Ausführungsform der Beleuchtungseinrichtung weist eine zusätzliche, zweite Strahlungsquelle auf, insbesondere eine zweite Laserquelle zur Aussendung von Laserstrahlung mit einer sich von der Wellenlänge der ersten Laserquelle unterscheidenden zweiten Wellenlänge $\lambda$ zwischen 700nm und 1400nm. Mittels eines Schaltelements kann entweder die erste und/oder die zweite Quelle eingeschaltet werden.

Der erfindungsgemässe Zielaufheller eignet sich zur Anwendung mit allen Arten von Nachtsichttechniken, welche zum Empfang von elektromagnetischer Strahlung mindestens einer Wellenlänge aus dem Wellenlängenbereich zwischen 700 und 1400nm ausgebildet sind und insbesondere diese Strahlung sichtbar machen, wie beispielsweise digitale CCD-Systeme.

Ein erfindungsgemässer Nachtsichtgerätzielaufheller wird nachfolgend anhand von in der Zeichnung schematisch dargestellten Ausführungsbeispielen rein beispielhaft näher beschrieben. Im Einzelnen zeigen

Fig.1    eine erfindungsgemässe Beleuchtungseinrichtung mit Laserquelle, erster und zweiter Optik;

Fig.2    Komponenten der erfindungsgemässen Beleuchtungseinrichtung;

Fig.3    die Beleuchtungseinrichtung, angeordnet in einem Gehäuse;

Fig.4    ein Messverfahren zur Bestimmung der Augensicherheit der Beleuchtungseinrichtung;

Fig.5    die Beleuchtungseinrichtung mit einer erfindungsgemässen mechanischen Verstellwegbeschränkung der zweiten Optik zum Beschränken des Divergenzwinkels;

Fig.6    die Anwendung der Beleuchtungseinrichtung mit einem erfindungsgemäss nach unten beschränkten Divergenzwinkel;

Fig.7    die Winkelausdehnung einer Laserquelle und das im Auge eines Betrachters projizierte Abbild der Laserquelle; und

Fig.8    die Beleuchtungseinrichtung mit einer Steuerkomponente zur Begrenzung der Laserquellenausgangsleistung.

In Figur 1 ist eine Ausführungsform einer erfindungsgemässen Beleuchtungseinrichtung 1 gezeigt. Die erste Optik 3 zum Aufweiten des von der Laserquelle 2 emittierten Strahls und Erzeugen des gewünschten Strahlquerschnitts ist der Laserquelle 2 nachgeordnet, welche Strahlung im Wellenlängenbereich zwischen 700nm und 1400nm und mit einer Strahlungsleistung von mindestens 15mW, insbesondere 100 bis 500mW, emittiert. Der Strahl wird anhand der ersten Optik 3 so aufgeweitet, dass der Strahlquerschnitt vor dem Eintritt in die zweite Optik 4 einen Durchmesser von wenigstens 5mm aufweist und so in die zweite Optik 4 gelenkt, dass diese im Wesentlichen vollständig, insbesondere gleichmässig, ausgeleuchtet wird. Komponenten der ersten und/oder der zweiten Optik sind entlang der gemeinsamen optischen Achse der ersten und zweiten Optik beschränkt verschiebbar angebracht. Durch Verschieben dieser Komponenten entlang besagter Achse wird der Divergenzwinkel der abgestrahlten Strahlung verändert, wobei durch die nicht dargestellte Begrenzung des Verschiebweges eine definierte Mindestdivergenz gewährleistet ist.

Figur 2 zeigt, mehr ins Detail gehend, erfindungsgemässe Ausführungsformen der ersten Optik 3 und der zweiten Optik 4. Die erste Optik 3 besteht aus einer plankonkaven Linse als Negativlinse 3' nahe an der Laserquelle 2, wie z.B. im Abstand von 1,6mm, welche den Strahl definiert aufweitet. Durch das Aufweiten des Strahls mittels der ersten Optik 3 wird die Strahldichte verringert und ein Strahlquerschnitt vor Eintritt des Strahls in die zweite Optik von mindestens 5mm definiert erzeugt, wie z.B. 13mm. Die erste Optik 3 lenkt den Strahl so in die zweite Optik, dass diese in jeder durch das Verschieben möglichen Stellung vollständig, insbesondere gleichmässig, ausgeleuchtet wird.

Die hier rein exemplarisch als dreilinsiges System aus einer Positivlinse 4', einer Negativlinse 4" und einer Positivlinse 4"' dargestellte zweite Optik ist der ersten Optik 3 nachgeordnet und emittiert den Strahl mit einem Strahlquerschnitt von mindestens 5mm, wie z.B. 13mm, definiert divergent. Durch Verschieben der zweiten Optik 4 entlang ihrer optischen Achse wird der Divergenzwinkel verändert.

Zusätzlich oder alternativ zu der gezeigten Komponente 3' der ersten Optik 3 kann die erste Optik 3 weitere, nicht dargestellte, optische Elemente wie beispielsweise eine Streulinse, ein Hologramm, eine Gradientenoptik oder eine Zylinderlinse aufweisen. Die Komponenten der zweiten Optik können zu einem Linsensystem mechanisch verbunden sein.

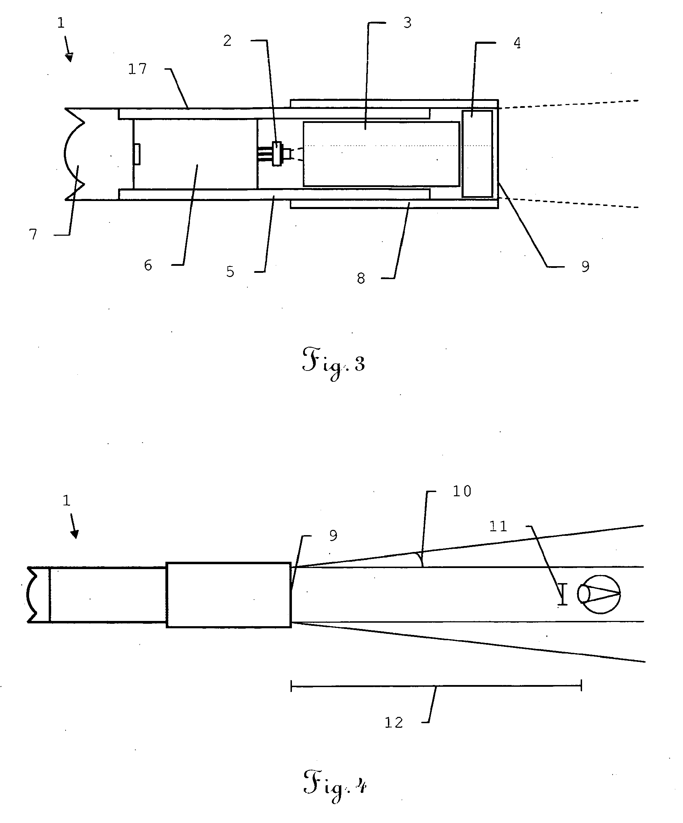

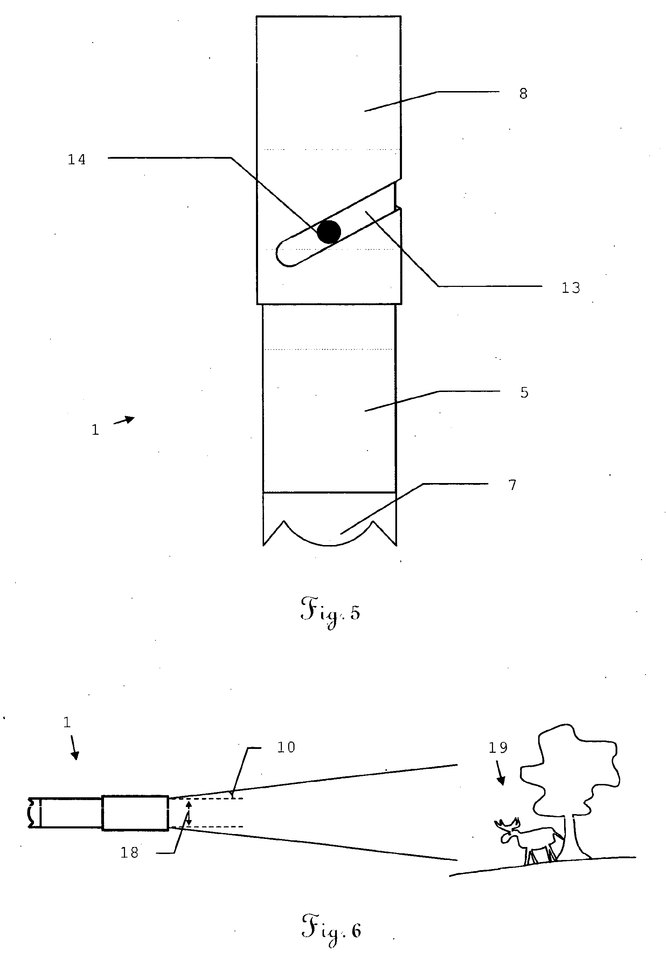

Figur 3 zeigt einen Längsschnitt einer erfindungsgemässen, tragbaren Ausführung der Beleuchtungseinrichtung 1, bei welcher die Komponenten in einem Gehäuse 17 angebracht sind. Das Gehäuse besteht aus einem Hauptrohr 5, einem Deckel mit einem Schaltelement 7 und einem Fokussierrohr 8 mit Austrittsfenster 9, wobei das Fokussierrohr 8 auf das Hauptrohr 5 aufgesteckt ist. Das Austrittsfenster 9 ist als Filterelement zur Verhinderung der Emission von sichtbarer Strahlung ausgebildet. Im Hauptrohr 5 sind ein Fach für eine Energiequelle 6, die Laserquelle 2 und die erste Optik 3 angeordnet. Durch Betätigen des Schaltelements 7 ist die Laserquelle ein- bzw. ausschaltbar. Im Fokussierrohr 8 ist die zweite Optik 4 angeordnet. Durch Drehen des Fokussierrohrs 8 um die Längsachse wird selbiges in der Längsrichtung der Beleuchtungseinrichtung 1 verschoben. Durch einen mechanischen Anschlag, welcher nachfolgend in Figur 5 gezeigt ist, ist der Verstellweg des Fokussierrohrs 8, und somit der Divergenzwinkel der abgestrahlten Strahlung, beschränkt.

In Figur 4 ist zur Erläuterung das Verfahren zur Bestimmung der Augensicherheit einer Laserquelle dargestellt. Dazu wird die Strahlungsleistung innerhalb einer kreisrunden Blende 11 mit 7mm Durchmesser im Abstand 12 von 100mm vom Austrittsfenster 9 als scheinbare Quelle der Beleuchtungseinrichtung 1 gemessen. Anhand der gemessenen Strahlungsleistung wird eine Bestrahlungsstärke berechnet, welche zur Gewährung der Augensicherheit einen bestimmten Wert, nämlich den entsprechenden MZB-Wert, nicht überschreiten darf.

In Figur 5 ist eine Ausführungsform der mechanischen Verstellwegbeschränkung des Fokussierrohrs 8 einer erfindungsgemässen Beleuchtungseinrichtung 1 gezeigt. Das Fokussierrohr 8 besitzt eine bahnartige Aussparung 13, welche als Führung für das Verstellen des Fokussierrohrs 8 fungiert, wobei das Fokussierrohr 8 auf das Hauptrohr 5 gesteckt ist. Weiter wird in eine Bohrung im Hauptrohr 5 eine Schraube 14 als Führungsstift eingedreht, sodass der Schraubenkopf sich in der Führungsrille 13 befindet. Der Schraubenkopf in der führungsbahnartigen Aussparung 13 führt somit die Verschiebung des Fokussierrohrs. Durch einen mechanischen Anschlag wird die Relativbewegung des Schraubenkopfes zur Führungsrille 13 und somit die Variierbarkeit des Divergenzwinkels zur Gewährleistung einer Mindestdivergenz definiert beschränkt.

Figur 6 zeigt die Anwendung einer erfindungsgemässen augensicheren Beleuchtungseinrichtung 1. Die Beleuchtungseinrichtung 1 gewährt einen Mindestdivergenzwinkel 10, wie z.B. 80mrad, sowie eine flächenartige Charakteristik 18 der Strahlung, wie z.B. ein Strahlquerschnitt von 20mm Durchmesser bei der Emission der Strahlung, und leuchtet somit augensicher ein Zielobjekt 19 aus, auch wenn das Zielobjekt ein in die Quelle blickendes Auge darstellt.

Durch die vollständige und gleichmässige Ausleuchtung der zweiten Optik weist der Strahlquerschnitt des emittierten Strahls am Zielobjekt keine Muster auf, was gegebenenfalls vorteilhaft sein kann. Beim Auftreffen des Strahls am Zielobjekt tritt allerdings im Allgemeinen eine Streuung der Strahlung am Zielobjekt auf, welche die Aufhellung des Ziels zusätzlich beeinflusst.

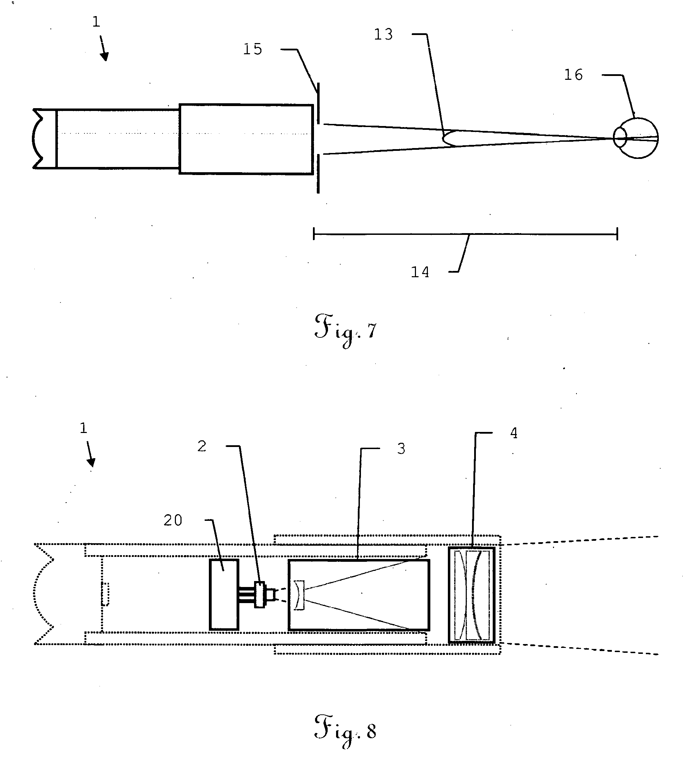

In Figur 7 ist zur Erläuterung die Berechnung der Winkelausdehnung einer scheinbaren Quelle gezeigt, welche die maximal zulässige Bestrahlung zur Gewährleistung der Augensicherheit beeinflusst. Die Winkelausdehnung beschreibt den Winkel 13, unter dem eine Blende 15, anhand welcher die Ausgangsleistung der Beleuchtungseinrichtung 1 auf 63% reduziert wird, von einem Raumpunkt aus erscheint. Für eine Analyse der maximal zulässigen Bestrahlung ist die Winkelausdehnung durch den Beobachtungsabstand von der scheinbaren Quelle 14 bestimmt, aber durch keinen geringeren Abstand als 100mm. Die scheinbare Quelle wird im Auge des Betrachters 16 auf die Netzhaut projiziert.

Figur 8 zeigt die Beleuchtungseinrichtung 1 mit der Laserquelle 2, der ersten Optik 3, der zweiten Optik 4 und einer Steuerkomponente 20, welche die Stellung der zweiten Optik 4 erfasst und daraus den eingestellten Divergenzwinkel der emittierten Strahlung bestimmt. Anhand dieses Divergenzwinkels passt die Steuerkomponente die Ausgangsleistung der Laserquelle zur Beschränkung der Strahlungsleistung des Aufhellers entsprechend an.

Es versteht sich, dass diese dargestellten Figuren nur Beispiele möglicher Ausführungsformen darstellen. So könnten beispielsweise die Komponenten ebenso als kompakte Einheit zum Einbau in Fremdgeräte oder als stationäre Beleuchtungseinrichtung erfindungsgemäss angeordnet sein.

**Patentansprüche**

**1.** Zielaufheller (1) für Nachtsichttechnik mit

- einer Laserquelle (2), wobei die strahlungsleistung der Laserquelle wenigstens 15mW, insbesondere 100 bis 500mW, beträgt und die Laserquelle zur Emission von Strahlung mit einer Wellenlänge λ zwischen 700nm und 1400nm ausgebildet ist,
- einer zweiten optik (4) zur divergenten Emission der Strahlung, und
- einer der Laserquelle (2) nachgeordneten und der zweiten Optik (4) vorgesetzten ersten Optik (3),

wobei eine definierte Variierbarkeit des Divergenzwinkels (10) der emittieren Strahlung gewährleistet ist,
**dadurch gekennzeichnet, dass**

- die erste Optik (3) zur Aufweitung des Strahlquerschnitts vor Eintritt in die zweite Optik (1) auf einen Durchmesser von mindestens 5mm und zur Lenkung des Strahls in die zweite Optik (4) ausgebildet ist, und dass
- die Variierbarkeit des Divergenzwinkels (10) zur Gewährleistung einer Mindestdivergenz eingeschränkt ist.

**2.** Zielaufheller nach Anspruch 1,
**dadurch gekennzeichnet, dass**
der Laserstrahl beim Austreten aus der zweiten Optik (4) einen Strahlquerschnitt von mindestens 5mm aufweist.

**3.** Zielaufheller nach einem der vorangehenden Ansprüche,
**dadurch gekennzeichnet, dass**
die zweite Optik (4) im Wesentlichen vollständig, insbesondere gleichmässig, ausgeleuchtet wird.

**4.** Zielaufheller nach einem der vorangehenden Ansprüche,
**dadurch gekennzeichnet, dass**
der Zielaufheller tragbar ist.

**5.** Zielaufheller nach cincm der vorangehender Ansprüche,
**dadurch gekennzeichnet, dass**
der von der Wellenlänge λ und von einer Winkelausdehnung α (13) des Strahlquerschnitts bei der Emission der Strahlung als scheinbare Quelle abhängige Bestrahlungswert B mit $B=18\cdot C_4\cdot C_6\cdot C_7\cdot T_2{}^{0.25}W/m^2$, zur Gewährleistung der Augensicherheit, gemessen am Punkt der grössten Gefährdung, jedoch mindestens in 100mm Entfernung (12) von der scheinbaren Quelle, mit einer sich im Strahlgang der divergent emittierten Laserstrahlung befindlichen kreisrunden Blende mit 7mm Durchmesser (11), nicht überschritten wird, wobei

$$C_4 = \begin{cases} 10^{0,002\cdot(\lambda-700)} & \text{für } 700 \leq \lambda < 1050 \\ 5 & \text{für } 1050 \leq \lambda \leq 1400 \end{cases},$$

$$C_7 = \begin{cases} 1 & \text{für } 700 \leq \lambda < 1150 \\ 10^{0,018\cdot(\lambda-1150)} & \text{für } 1150 \leq \lambda < 1200 \\ 8 & \text{für } 1200 \leq \lambda \leq 1400 \end{cases},$$

$$T_2 = \begin{cases} 10\cdot 10^{(\alpha-1,5)/98,5}\,s & \text{für } 1,5 < \alpha \leq 100 \\ 100s & \text{für } 100 < \alpha \end{cases}$$

und

$$C_6 = \begin{cases} \alpha/1,5 & \text{für } 1,5 < \alpha \leq 100 \\ 66,7 & \text{für } 100 < \alpha \end{cases}.$$

**6.** Zielaufheller nach einem der vorangehenden Ansprüche,
**dadurch gekennzeichnet, dass**
die Variierbarkeit des Divergenzwinkels (10) durch eine Verschiebbarkeit von mindestens einer Komponente (3',4', 4",4''') der ersten oder der zweiten Optik in Richtung der gemeinsamen optischen Achse ausgebildet ist und diese Verschiebbarkeit durch eine Verstellwegbeschränkung eingeschränkt, ist.

**7.** Zielaufheller nach Anspruch 6,
**dadurch gekennzeichnet, dass**
die Verstellwegbeschränkung durch einen mechanischen Anschlag (14) ausgebildet ist.

**8.** Zielaufheller nach Anspruch 7,
**gekennzeichnet durch**
zwei wenigstens teilweise gegeneinander verschiebbare Gehäuse zur Aufnahme der ersten und/oder zweiten Optik, wobei das eine Gehäuse eine Führungsrille (13) aufweist, **durch** die ein die Variierbarkeit des Divergenzwinkels definierender Stift (14), der am anderen Gehäuse angebracht ist, so geführt wird, dass die geführte Relativbewegung des Stiftes zur Führungsrille **durch** einen die Mindestdivergenz festlegenden Anschlag begrenzt wird.

**9.** Zielaufheller nach einem der vorangehenden Ansprüche,
**dadurch gekennzeichnet, dass**
die zweite Optik (4) folgende optische Elemente aufweist:

- eine Positivlinse (4'),
- eine Negativlinse (4") und
- eine Positivlinse (4'''),

insbesondere wobei die Linsen zu einem Linsensystem mechanisch verbunden sind.

**10.** Zielaufheller nach einem der vorangehenden Ansprüche,
**dadurch gekennzeichnet, dass**
die erste Optik (3) zur Aufweitung des Strahl querschnitts mindestens eines der folgenden optischen Elemente aufweiset:

- eine Streuscheibe,
- ein gradientenoptisches Element,
- ein Hologrammelement oder
- eine Zylinderlinse.

**11.** Zielaufheller nach einem der vorangehenden Ansprüche,
**dadurch gekennzeichnet, dass**
der Zielaufheller in einem Gehäuse (17) mit einem Batteriefach (6), einem Schaltelement (7) und einem Austrittsfenster (9) angeordnet ist.

**12.** Zielaufheller nach einem der vorangehenden Ansprüche,
**gekennzeichnet durch**
eine Steuerkomponente (20) zur Anpassung der Ausgangsleistung der Laserquelle (2) an der jeweiligen Divergenzwinkel (10) um die Restrahlungsleislung zu beschränkten.

**13.** Zielaufheller nach Anspruch 12,
**dadurch gekennzeichnet, dass**
die Steuerkomponente (20) anhand (der Stellung wenigstens einer Komponente der ersten oder zweiten Optik den eingestellten Divergenzwinkel erfasst und daraufhin die Ausgangsleistung der Laserquelle zur Beschränkung der Bestrahlungsleistung anpasst.

**14.** Zielaufheller nach einem der vorangehenden Ansprüche,
**gekennzeichnet durch**
ein Filterelement zur Verhinderung der Emission von Strahlung eines definierten Wellenlängenbereichs, insbesondere zur Filterung von sichtbarer Strahlung, wobei insbesondere das Filterelement als Austrittsfenster (9) zum Schutz der Optik ausgebildet ist.

**15.** Zielaufheller nach einem der vorangehenden Ansprüche, **gekennzeichnet durch**
eine zweite Strahlungsquelle, insbesondere eine zweite Laserquelle zur Aussendung von Laserstrahlung mit einer Wellenlänge λ zwischen 700nm und 1400nm.

**Claims**

**1.** Target brightener (1) for night vision technology, having

- a laser source (2), with the radiation power of the laser source being at least 15 mW, in particular 100 to 500 mW, and the laser source being designed to emit radiation with a wavelength λ between 700 nm and 1400 nm,
- a second optics (4) for divergent emission of the radiation, and
- a first optics (3) downstream of the laser source (2) and upstream of the second optics (4),

with a defined variability of the divergence angle (10) of the emitted radiation being ensured, **characterized in that**

- the first optics (3) is designed to expand the beam cross section before entry into the second optics (4) to a diameter of at least 5 mm, and to deflect the beam into the second optics (4), and **in that**
- the variability of the divergence angle (10) is restricted to ensure a minimum divergence.

**2.** Target brightener according to Claim 1, **characterized in that** the laser beam has a beam cross section of at least 5 mm when exiting from the second optics (4).

**3.** Target brightener according to one of the preceding claims, **characterized in that** the second optics (4) is illuminated substantially completely, in particular uniformly.

**4.** Target brightener according to one of the preceding claims, **characterized in that** the target brightener is portable.

**5.** Target brightener according to one of the preceding claims, **characterized in that**, in order to ensure eye safety as measured at the point of greatest danger, but at least at a distance (12) of 100 mm from the apparent source, with the aid of a circular aperture of 7 mm diameter (11) located in the beam path of the divergently emitted laser radiation, the irradiation value B, where $B=18 \cdot C_4 \cdot C_6 \cdot C_7 \cdot T_2^{0.25} W/m^2$, dependent on the wavelength λ and on an angular extent α (13) of the beam cross section upon the emission of the radiation as apparent source is not exceeded, where

$$C_4 = \begin{cases} 10^{0.002(\lambda-700)} & \text{for } 700 \leq \lambda < 1050 \\ 5 & \text{for } 1050 \leq \lambda \leq 1400 \end{cases},$$

$$C_7 = \begin{cases} 1 & \text{for } 700 \leq \lambda < 1150 \\ 10^{0.018 \cdot (\lambda-1150)} & \text{for } 1150 \leq \lambda < 1200 \\ 8 & \text{for } 1200 \leq \lambda \leq 1400 \end{cases},$$

$$T_2 = \begin{cases} 10 \cdot 10^{(\alpha-1.5)/98.5}s & \text{for } 1.5 < \alpha \leq 100 \\ 100s & \text{for } 100 < \alpha \end{cases}$$

and

**EP 1 843 191 B1**

$$C_6 = \begin{cases} \alpha/1{,}5 & \text{for } 1{,}5 < \alpha \le 100 \\ 66{,}7 & \text{for } 100 < \alpha \end{cases} \quad .$$

6. Target brightener according to one of the preceding claims, **characterized in that** the variability of the divergence angle (10) is defined by a displaceability of at least one component (3', 4', 4", 4''') of the first or of the second optics in the direction of the common optical axis, and this displaceability is restricted by a limitation of adjustment.

7. Target brightener according to Claim 6, **characterized in that** the limitation of adjustment is defined by a mechanical stop (14).

8. Target brightener according to Claim 7, **characterized by** two housings at least partially displaceable relative to one another for holding the first and/or second optics; one housing having a guide groove (13) by means of which a pin (14) which defines the variability of the divergence angle and is fitted on the other housing is guided in such a manner that the guided relative movement of the pin relative to the guide groove is bounded by a stop fixing the minimum divergence.

9. Target brightener according to one of the preceding claims, **characterized in that** the second optics (4) has the following optical elements:

    - a positive lens (4'),
    - a negative lens (4"), and
    - a positive lens (4'''),

    the lenses particularly being mechanically connected to form a lens system.

10. Target brightener according to one of the preceding claims, **characterized in that** the first optics (3) has at least one of the following optical elements in order to expand the beam cross section:

    - a diffusing screen,
    - a gradient optical element,
    - a hologram element, or
    - a cylindrical lens.

11. Target brightener according to one of the preceding claims, **characterized in that** the target brightener is arranged in a housing (17) having a battery compartment (6), a switching element (7) and an exit window (9).

12. Target brightener according to one of the preceding claims, **characterized by** a control component (20) for adapting the output power of the laser source (2) to the respective divergence angle (10) in order to restrict the irradiation power.

13. Target brightener according to Claim 12, **characterized in that** the control component (20) detects the set divergence angle with the aid of the position of at least one component of the first or second optics, and thereupon adapts the output power of the laser source in order to restrict the irradiation power.

14. Target brightener according to one of the preceding claims, **characterized by** a filter element for preventing the emission of radiation of a defined wavelength region, in particular for filtering visible radiation, the filter element being designed, in particular, as an exit window (9) for protecting the optics.

15. Target brightener according to one of the preceding claims, **characterized by** a second radiation source, in particular a second laser source for emitting laser radiation with a wavelength $\lambda$ between 700 nm and 1400 nm.

**Revendications**

1. Eclaireur de cible (1) pour technologie de vision nocturne, avec :

- une source laser (2), la puissance de rayonnement de la source laser étant d'au moins 15 mW, en particulier de 100 à 500 mW, et la source laser étant réalisée pour émission de rayonnement d'une longueur d'onde λ dans la fourchette comprise entre 700 nm et 1400 nm,
- une deuxième optique (4), pour l'émission divergente du rayonnement, et
- une première optique (3), disposée en aval de la source laser (2) et en amont de la deuxième optique (4),

une variabilité définie de l'angle de divergence (10) du rayonnement émis étant assurée,
**caractérisé en ce que**

- la première optique (3) est réalisée pour l'élargissement de la section transversale de rayon avant l'entrée dans la deuxième optique (4) à un diamètre d'au moins 5 mm et pour le guidage du rayon dans la deuxième optique (4), et **en ce que**
- la variabilité de l'angle de divergence (10) est limitée, pour assurer une divergence minimale.

2. Eclaireur de cible selon la revendication 1,
**caractérisé en ce que**
le rayon laser présente une section transversale de rayon d'au moins 5 mm à la sortie de la deuxième optique (4).

3. Eclaireur de cible selon l'une des revendications précédentes,
**caractérisé en ce que**
la deuxième optique (4) est illuminée pratiquement complètement, en particulier de manière uniforme.

4. Eclaireur de cible selon l'une des revendications précédentes,
**caractérisé en ce que**
l'éclaireur de cible est portatif.

5. Eclaireur de cible selon l'une des revendications précédentes,
**caractérisé en ce que**
la valeur d'illumination B, dépendant de la longueur d'onde λ et d'une étendue angulaire α (13) de la section de rayon, lors de l'émission du rayonnement en tant que source apparente, avec $B = 18 \cdot C_4 \cdot C_6 \cdot C_7 \cdot T_2^{0,25}$ W/m$^2$, pour assurer la protection des yeux, mesurée au point de la mise en danger maximale, cependant au moins à 100 mm de distance (12) de la source apparente, avec un diaphragme circulaire de 7 mm de diamètre (11) se trouvant dans le chemin de rayon du rayonnement laser divergent émis, n'est pas dépassée, sachant que :

$$C_4 = \begin{cases} 10^{0,002(\lambda-700)} & \textit{pour } 700 \leq \lambda < 1050 \\ 5 & \textit{pour } 1050 \leq \lambda \leq 1400 \end{cases}$$

$$C_7 = \begin{cases} 1 & \textit{pour } 700 < \lambda < 1050 \\ 10^{0,018(\lambda-1150)} & \textit{pour } 1050 \leq \lambda < 1200 \\ 8 & \textit{pour } 1200 \leq \lambda \leq 1400 \end{cases}$$

$$T_2 = \begin{cases} 10 \bullet 10(\alpha-1,5)/98,5 & \textit{pour } 1,5 < \alpha \leq 100 \\ 100s & \textit{pour } 100 < \alpha \end{cases}$$

et

$$C_6 = \begin{cases} \alpha/1,5 & pour\ 1,5 < \alpha \le 100 \\ 66,7 & pour\ 100 < \alpha \end{cases}$$

**6.** Eclaireur de cible selon l'une des revendications précédentes,
**caractérisé en ce que**
la variabilité de l'angle de divergence (10) est réalisée au moyen d'une possibilité de déplacement d'au moins un composant (3', 4', 4", 4''') de la première ou de la deuxième optique en direction de l'axe optique commun, et cette possibilité de déplacement est limitée par le biais d'une limitation de la course de réglage.

**7.** Eclaireur de cible selon la revendication 6,
**caractérisé en ce que**
la limitation de la course de réglage est réalisée au moyen d'une butée (14) mécanique.

**8.** Eclaireur de cible selon la revendication 7,
**caractérisé par**
deux boîtiers, déplaçables au moins partiellement l'un par rapport à l'autre, pour recevoir la première et/ou la deuxième optique, le premier boîtier présentant une rainure de guidage (13), au moyen de laquelle un téton (14), définissant la variabilité de l'angle de divergence, monté sur l'autre boîtier, est guidé de manière que le déplacement relatif guidé du téton par rapport à la rainure de guidage soit limité par une butée fixant la divergence minimale.

**9.** Eclaireur de cible selon l'une des revendications précédentes,
**caractérisé en ce que**
la deuxième optique (4) présente les éléments optiques suivants :

- une lentille positive (4'),
- une lentille négative (4") et
- une lentille positive (4'''),

en particulier les lentilles étant reliées mécaniquement pour constituer un système de lentilles.

**10.** Eclaireur de cible selon l'une des revendications précédentes,
**caractérisé en ce que**
la première optique (3), pour étendre la section transversale de rayon, présente au moins l'un des éléments optiques suivants :

- un disque de dispersion,
- un élément optique à gradient,
- un élément à hologramme, ou
- une lentille cylindrique.

**11.** Eclaireur de cible selon l'une des revendications précédentes,
**caractérisé en ce que**
l'éclaireur de cible est disposé dans un boîtier (17) comprenant un compartiment à batterie (6), un élément de commutation (7) et une fenêtre de sortie (9).

**12.** Eclaireur de cible selon l'une des revendications précédentes,
**caractérisé par**
un composant de commande (20), pour adaptation de la puissance de sortie de la source laser (2) à l'angle de divergence (10) spécifique, de manière à limiter la puissance d'illumination.

**13.** Eclaireur de cible selon la revendication 12,
**caractérisé en ce que**
le composant de commande (20) appréhende l'angle de divergence réglé à l'aide de la position d'au moins un composant de la première ou de la deuxième optique, et, suite à cela, adapte la puissance de sortie de la source laser, pour limiter la puissance d'illumination.

**14.** Eclaireur de cible selon l'une des revendications précédentes,
**caractérisé par**
un élément filtrant, pour empêcher l'émission de rayonnement d'une plage de longueurs d'onde définie, en particulier pour le filtrage de rayonnement visible, sachant que, en particulier, l'élément filtrant est réalisé sous la forme de fenêtre de sortie (9) pour la protection de l'optique.

**15.** Eclaireur de cible selon l'une des revendications précédentes,
**caractérisé par**
une deuxième source de rayonnement, en particulier une deuxième source laser, pour émission d'un rayonnement laser d'une longueur d'onde λ dans la fourchette comprise entre 700 nm et 1400 nm.

$\mathcal{F}ig.\ 1$

$\mathcal{F}ig.\ 2$

$\mathcal{F}$ig. 3

$\mathcal{F}$ig. 4

Fig. 5

Fig. 6

1

15

13

16

14

𝔉ig. 7

1

20

2

3

4

𝔉ig. 8

**EP 1 843 191 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6714364 B1